# EUROPÄISCHE PATENTSCHRIFT

(11) **EP 3 729 056 B1**
(45) Veröffentlichungstag und Bekanntmachung des Hinweises auf die Patenterteilung: **24.07.2024**
(21) Anmeldenummer: 18781994.1
(22) Anmeldetag: 25.09.2018
(51) Int. Cl.: G01N 21/21, G01N 21/90, G01B 11/24, G01M 11/00, G01N 21/88

(54) **DURCHLICHTINSPEKTIONSVORRICHTUNG UND DURCHLICHTINSPEKTIONSVERFAHREN ZUR SEITENWANDINSPEKTION VON BEHÄLTERN**
TRANSMITTED LIGHT INSPECTION APPARATUS AND TRANSMITTED LIGHT INSPECTION METHOD FOR SIDEWALL INSPECTION OF CONTAINERS
APPAREIL D'INSPECTION A LUMIÈRE TRANSMISE ET PROCÉDÉ D'INSPECTION A LUMIÈRE TRANSMISE POUR L'INSPECTION DES PAROIS LATÉRALES DE RÉCIPIENTS

(30) Priorität: 20.12.2017 DE 102017223347
(43) Veröffentlichungstag der Anmeldung: 28.10.2020
(73) Patentinhaber: Krones AG, 93073 Neutraubling (DE)
(72) Erfinder: KWIRANDT, Rainer, 93073 Neutraubling (DE)
(74) Vertreter: Grünecker Patent- und Rechtsanwälte PartG mbB
(86) Internationale Anmeldenummer: PCT/EP2018/075849
(87) Internationale Veröffentlichungsnummer: WO 2019/120654

(56) Entgegenhaltungen:
- EP-A1- 1 176 416
- EP-A2- 0 926 486
- DE-U1- 202013 100 834
- DE-U1- 202013 100 834
- US-B1- 7 379 177

## Beschreibung

Die Erfindung betrifft eine Durchlichtinspektionsvorrichtung und ein Durchlichtinspektionsverfahren zur Seitenwandinspektion von Behältern mit den Merkmalen des Oberbegriffs von Anspruch 1 bzw. 10.

Üblicherweise werden derartige Durchlichtinspektionsvorrichtungen und -verfahren in Getränkeverarbeitungsanlagen dazu eingesetzt, transparente Fremdkörper, wie beispielsweise Folienreste, in Behältern zu erkennen. Die Behälter könne beispielsweise Flaschen sein, in die nach der Durchlichtinspektion ein Getränk abgefüllt wird.

Die Durchlichtinspektionsvorrichtung umfasst üblicherweise einen Transporteur zum Transport der Behälter und wenigstens eine daran angegliederte Inspektionsstation, um die Behälter mit polarisiertem Licht zu durchleuchten. Die Behälter werden bei der Inspektion zwischen einer Beleuchtungseinrichtung mit einem nachgeschalteten Polarisator und einem Kamerasystem mit einem vorgeschalteten Analysator geführt und so mit dem polarisierten Licht durchleuchtet und mit dem Kamerasystem erfasst.

Da die transparenten Fremdkörper oft Spannungsdoppelbrechung aufweisen oder selbst die Polarisationsrichtung drehen, können sie beim Durchleuchten mit polarisiertem Licht besonders gut erkannt werden und bilden sich im Kamerabild als dunklere Bereiche ab. Sie können dann im Kamerabild mit an sich bekannten Bildverarbeitungsalgorithmen identifiziert werden.

Die naheliegende Verwendung von linearen Polfiltern wird in der Praxis vermieden, weil alle transparenten Fremdkörper, deren spannungs-optischen Hauptachsen parallel oder senkrecht zu den Polarisationrichtungen der linearen Polfilter sind, nicht abdunkeln und damit nicht erkannt werden können. Um die Erkennung von der Orientierung eines transparenten Fremdkörpers möglichst unabhängig zu halten, werden daher üblicherweise zirkulare Polfilter verwendet.

Um besonders dünnwandige und trotzdem bruchsichere (Glas-)Behälter zu erhalten, werden seit neuem die Behälter einer thermischen Härtung unterworfen. Diese Behälter weisen im Inspektionsbild dunkle Flecken auf, obwohl sie keine polarisierenden, durchsichtigen Fremdkörper enthalten. Dadurch kann es gelegentlich vorkommen, dass verschmutzungsfreie Behälter unnötig aus dem Produktionsprozeß ausgeschieden werden.

Die US7379177B1 offenbart ein System und Verfahren zum Untersuchen von Objekten auf einen charakteristischen Parameter. Das System umfasst mindestens eine elektromagnetische Quelle zum Emittieren von mindestens zwei getrennten Wellenlängen elektromagnetischer Energie. Mindestens ein elektromagnetischer Detektor ist in einem vordefinierten Abstand von der elektromagnetischen Quelle positioniert, um einen einfallenden Intensitätswert der elektromagnetischen Energie bei den zwei Wellenlängen zu messen. Ein zwischen der elektromagnetischen Quelle und dem elektromagnetischen Detektor platziertes Objekt wird mit elektromagnetischer Energie bei den zwei Wellenlängen bestrahlt und die durch das Objekt übertragene elektromagnetische Energie wird durch den elektromagnetischen Detektor gemessen. Das System umfasst eine computerbasierte Plattform, die operativ mit dem elektromagnetischen Detektor verbunden ist, um Intensitätsdatenwerte von dem elektromagnetischen Detektor zu empfangen und um Dämpfungsverhältniswerte zu berechnen. Die Dämpfungsverhältniswerte werden verwendet, um einen Pegel des charakteristischen Parameters zu bestimmen.

Weitere Beispiele der Durchlichtinspektionsvorrichtungen zur Seitenwandinspektion von Behältern sind aus EP1 176416A1 und EP0926486A2 bekannt:
EP1 176416A1 beschreibt eine Vorrichtung umfassend eine erste Lichtquelle zur Abgabe eines sichtbaren Lichtspektrums und eine zweite Lichtquelle zur Abgabe eines infraroten Lichtspektrums, so dass sowohl hell als auch dunkel gefärbte Behälter inspiziert werden können.
EP0926486A2 beschreibt eine Vorrichtung umfassend eine breitbandige Lichtquelle zur Abgabe des Lichts im sichtbaren und infraroten Lichtspektrum und einem der Lichtquelle nachgeschalteten Polarisator, der das Licht im sichtbaren Spektrum polarisiert und für das infrarote Licht transparent ausgebildet ist. Somit wird eine Erfassung von Spannungen durch das polarisierte sichtbare Licht und eine Erfassung von opaken Defekten durch das infrarote Licht gewährleistet.

Beispielsweise ist aus der DE 20 2013 100 834 U1 eine Vorrichtung zur Erfassung von Verschmutzungen an Behältern bekannt, bei der der Polarisator zur zirkularen oder elliptischen Polarisation des von der Beleuchtungseinrichtung abgestrahlten Lichts ausgebildet ist und die Behälter mit zwei Kameras erfasst werden, denen Analysatoren mit unterschiedlichen Polarisationsdrehrichtungen vorgeschaltet sind, um Verschmutzungen hinter Etiketten besonders gut zu erkennen.

Aufgabenstellung der vorliegenden Erfindung ist es daher, eine Durchlichtinspektionsvorrichtung und ein Durchlichtinspektionsverfahren bereitzustellen, mit dem eine zuverlässige Erkennung von transparenten Verschmutzungen in Behältertypen verschiedener Herstellungsverfahren gleichermaßen möglich ist.

Zur Lösung dieser Aufgabenstellung stellt die Erfindung eine Durchlichtinspektionsvorrichtung mit den Merkmalen des Anspruchs 1 bereit. Vorteilhafte Ausführungsformen sind in den Unteransprüchen genannt.

Bei umfangreichen Untersuchungen hat sich herausgestellt, dass normale (Glas-) Behältertypen spannungsarm sind und so die Polarisation des Lichts beim Durchleuchten wenig beeinflusst wird. Dadurch wird bei dem zirkular polarisierten Licht ein besonders hoher Kontrast zwischen den transparenten Verschmutzungen und der Behälterseitenwand erzielt.

Allerdings hat sich bei den Untersuchungen auch herausgestellt, dass bei dünnwandigen Behältertypen in der Behälterwand durch die thermische Härtung spannungsbehaftete Zonen mit unregelmäßiger Doppelbrechung entstehen, die im Inspektionsbild ähnliche dunkle Flecken erzeugen wie die polarisierenden, durchsichtigen Fremdkörper. Damit wird die zuverlässige Erkennung der polarisierenden, durchsichtigen Fremdkörper erschwert. Allerdings hat sich überraschenderweise herausgestellt, dass die Spannungen bei den spannungsbehafteten Behältertypen üblicherweise entlang der Behälterlängsachse verlaufen. Folglich wird gegenüber der Behälterlängsachse ausgerichtetes, linear polarisiertes Licht besonders wenig durch die Spannungen beeinflusst. Mit linearen, Polfiltern, die vorzugsweise parallel zur Behälterachse ausgerichtet sind, kann vermieden werden, dass die Behälterspannungen sichtbar werden. Allerdings wird dann wieder ein Teil der transparenten Fremdkörper nicht erkannt, wenn deren optischen Achsen parallel oder senkrecht zur den Polfilterachsen sind. Um dennoch die transparenten Verschmutzungen unabhängig von ihrer Orientierung gut zu erkennen, hat sich elliptisch polarisiertes Licht als besonders günstig herausgestellt.

Das elliptische Licht bringt zwei Nachteile mit sich: Einerseits sind zwar kommerzielle Polfilter linear oder zirkular erhältlich, eine Sonderanfertigung ist allerdings für geringe Stückzahlen nicht sinnvoll. Anderseits werden spannungsfreie Behälter mit normalen zirkularen Polfiltern noch besser inspiziert. Folglich ist eine Verdoppelung der Inspektionseinheiten, um beim Produktwechsel beide Polarisationsarten zur Verfügung zu haben, weder räumlich noch finanziell sinnvoll.

Diese Nachteile können dadurch gelöst werden, dass die Beleuchtungseinrichtung eine zweite Lichtquelle zur Abgabe des infraroten Lichtspektrums umfasst und normale zirkulare Polfilter verwendet werden. Zirkulare Polfilter enthalten eine Folie/Schicht, die eine Phasenverschiebung von einem Viertel der Licht-Wellenlänge (λ/4) erzeugt. Wird nun statt sichtbarem Licht infrarotlicht mit einer wesentlich längeren Wellenlänge verwendet, dann ist die Verzögerung wesentlich geringer als dem Viertel der Licht-Wellenlänge und es entsteht elliptisch polarisiertes Licht. So kann durch Umschalten zwischen der ersten Lichtquelle und der zweiten Lichtquelle zwischen zirkular oder elliptisch polarisiertem Licht gewählt werden. Folglich ist es also ohne Umbau der wenigstens einen Inspektionsstation möglich, sowohl bei spannungsfreien Behältertypen mit zirkular polarisiertem Licht als auch bei spannungsbehafteten Behältertypen mit elliptisch polarisiertem Licht zu arbeiten.

Dadurch können mit der erfindungsgemäßen Durchlichtinspektionsvorrichtung transparente Fremdkörper in Behältertypen verschiedener Herstellungsverfahren gleichermaßen zuverlässig erkannt werden.

Die Durchlichtinspektionsvorrichtung kann in einer Getränkeverarbeitungsanlage angeordnet sein. Ebenso kann die Durchlichtinspektionsvorrichtung in einer Anlage zur Herstellung der Behälter angeordnet sein. Der Durchlichtinspektionsvorrichtung kann eine Weiche nachgeordnet sein, um Behälter auszusortieren, bei denen durch die wenigstens eine Inspektionsstation ein oder mehrere transparente Fremdkörper erkannt wurden. Die aussortierten Behälter können gereinigt oder recycelt werden. Ferner kann die Weiche dazu ausgebildet sein, Behälter ohne transparente Fremdkörper einer Behälterbehandlungsmaschine, beispielsweise einem Füller zuzuführen.

Die Behälter können insbesondere Glassflaschen sein. Vorzugsweise können die Behälter dazu vorgesehen sein, Getränke, Hygieneartikel, Pasten, chemische, biologische und/oder pharmazeutische Produkte aufzunehmen. Im Allgemeinen können die Behälter für jegliche fließfähige bzw. abfüllbare Medien vorgesehen sein.

Die transparenten Verschmutzungen können Folienreste umfassen.

Der Transporteur kann vorzugsweise als Lineartransporteur ausgebildet sein, wobei an einer Seite die Beleuchtungseinrichtung mit dem nachgeschalteten Polarisator und auf der gegenüberliegenden Seite das Kamerasystem mit dem vorgeschalteten Analysator angeordnet ist. Denkbar ist auch, dass der Transporteur als Karussell ausgebildet ist, mit dem die Behälter zwischen der Beleuchtungseinrichtung mit dem nachgeschalteten Polarisator und dem Kamerasystem mit dem vorgeschalteten Analysator transportiert werden.

Die Beleuchtungseinrichtung kann die erste Lichtquelle, die zweite Lichtquelle, eine Linse, einen Diffusor und/oder eine Blende umfassen. Die erste Lichtquelle und/oder die zweite Lichtquelle können als Leuchtmittel eine Glühlampe, eine Gasentladungslampe, eine Leuchtstoffröhre und/oder LEDs umfassen. Die Leuchtmittel der ersten und der zweiten Lichtquelle können voneinander verschieden sein. Vorzugsweise werden die erste und zweite Lichtquelle derart kombiniert, indem mindestens eine Platine gemischt mit sichtbaren und infraroten LEDs bestückt wird. Durch die Ansteuerungselektronik kann dann einfach zwischen den verschiedenen Lichtfarben umgeschaltet werden.

Das sichtbare Lichtspektrum kann in einem Wellenlängenbereich von 380 nm bis 780 nm, vorzugsweise von 440 nm bis 650 nm, und/oder das infrarote Lichtspektrum kann in einem Wellenlängenbereich von 780 nm bis 3 µm, vorzugsweise von 800 nm - 1 µm liegen. Denkbar ist auch, dass das sichtbare Lichtspektrum und/oder das infrarote Lichtspektrum jeweils nur ein monochromatisches Lichtspektrum sind.

Der Polarisator kann innerhalb der Beleuchtungseinrichtung oder im Bereich eines Lichtaustritts der Beleuchtungseinrichtung angeordnet sein. Der Polarisator und/oder der Analysator können scheiben- oder folienartig ausgebildet sein. Beispielsweise kann es sich bei dem Polarisator und/oder dem Analysator um eine Polarisationsfolie handeln.

Das Kamerasystem kann eine Kamera und ein Objektiv umfassen. Die Kamera kann einen zeilen- oder flächenhaften Bildsensor umfassen, beispielsweise einen CCD-Sensor oder CMOS-Sensor. Das Kamerasystem kann über eine Datenleitung mit einer Bildverarbeitungseinheit verbunden sein, um Kamerabilder der durchleuchteten Behälter hinsichtlich der transparenten Verschmutzungen auszuwerten. Denkbar ist jedoch auch, dass die Bildverarbeitungseinheit in das Kamerasystem integriert ist.

Die Durchlichtinspektionsvorrichtung kann eine Steuerungseinrichtung umfassen, um die Beleuchtungseinrichtung und/oder das Kamerasystem zu steuern. Zudem kann die Steuerungseinrichtung eine Bildverarbeitungseinheit umfassen, um Kamerabilder des Kamerasystems zu empfangen und auf transparente Fremdkörper hin auszuwerten. Zudem kann die Steuerungseinrichtung dazu ausgebildet sein, den Transporteur zu steuern und/oder Transportpositionen der Behälter zu erfassen.

Der Polarisator kann derart angeordnet sein, dass beim Durchleuchten der Behälter mit der zweiten Lichtquelle eine Hauptpolarisationsrichtung des Polarisators parallel zu einer Behälterlängsachse verläuft. Da die Spannungen der dünnwandigen Behältertypen bevorzugt entlang der Behälterlängsachse verlaufen, wird so die Polarisation des elliptisch polarisierten Lichts der zweiten Lichtquelle beim Durchlaufen der Seitenwand des Behälters besonders wenig gestört. Mit Hauptpolarisationsrichtung des Polarisators kann die Richtung der großen Halbachse bei der elliptischen Polarisation des infraroten Lichtspektrums gemeint sein. Mit Behälterlängsachse kann eine Achse gemeint sein, die zentral durch eine Behältermündung und einen Behälterboden eines zu inspizierenden Behälters verläuft. Anders ausgedrückt kann die Behälterlängsachse senkrecht zum Behälterboden stehen.

Der Polarisator kann einen ersten linearen Polarisationsfilter und ein nachgeschaltetes erstes Verzögerungselement umfassen, wobei der erste lineare Polarisationsfilter derart angeordnet ist, dass dessen Polarisationsrichtung beim Durchleuchten der Behälter parallel zur Behälterlängsachse verläuft. Dadurch wird das Licht der ersten und zweiten Lichtquelle zunächst vom ersten linearen Polarisationsfilter linear polarisiert und anschließend durch das erste Verzögerungselement zirkular bzw. elliptisch polarisiert. Beispielsweise kann das erste Verzögerungselement eine λ/4-Schicht sein. Da das erste Verzögerungselement nur im sichtbaren Lichtspektrum tatsächlich um λ/4 verzögert und demgegenüber im infraroten Lichtspektrum nur um einen geringeren Faktor, beispielsweise um 0,64, kann so der Polarisator wellenlängenabhängig zirkular bzw. elliptisch polarisieren, so dass durch Umschalten zwischen der ersten und der zweiten Lichtquelle wahlweise die zirkulare Polarisation oder die elliptische Polarisation bewirkt wird.

Vorzugsweise kann der Analysator zur zirkularen Polarisation des sichtbaren Lichtspektrums und zur elliptischen Polarisation des infraroten Lichtspektrums ausgebildet sein. Dadurch ergibt sich ein besonders hoher Kontrast in den Kamerabildern. Dadurch, dass der Analysator im infraroten Lichtspektrum elliptisch polarisiert, dunkelt er das Licht zum Kamerasystem hin nur unwesentlich ab, so dass ein auswertbares Bild erhalten werden kann. "Auswertbares Bild" kann hier bedeuten, dass Folienreste das Bild aufhellen bzw. opaker Schmutz das Bild abdunkelt. Der Analysator kann zur linksdrehend elliptischen Polarisation des infraroten Lichtspektrums ausgebildet sein.

Der Analysator kann derart angeordnet sein, dass beim Durchleuchten der Behälter mit der zweiten Lichtquelle eine Hauptpolarisationsrichtung des Analysators parallel zu der Behälterlängsachse verläuft. Da die Spannungen der dünnwandigen Behälter bevorzugt entlang der Behälterlängsachse verlaufen, wird durch diese Anordnung elliptisch polarisiertes Licht mit der stärksten Polarisation in Richtung der Behälterlängsachse besonders wenig durch den Analysator gedämpft. Gleichzeitig wird ein höherer Kontrast zwischen den transparenten Verschmutzungen und der Behälterseitenwand erzielt.

Der Analysator kann ein zweites Verzögerungselement und einen nachgeschalteten zweiten linearen Polarisationsfilter umfassen, wobei der zweite lineare Polarisationsfilter derart angeordnet ist, dass dessen Polarisationsrichtung beim Durchleuchten parallel zu der Behälterlängsachse läuft.

Beispielsweise kann das zweite Verzögerungselement eine A/4-Schicht sein. Da das zweite Verzögerungselement nur im sichtbaren Lichtspektrum tatsächlich um λ/4 verzögert und demgegenüber im infraroten Lichtspektrum nur um einen geringeren Faktor, beispielsweise um 0,64, kann mit dieser Ausbildung des Analysators besonders einfach erreicht werden, dass durch Umschalten zwischen der ersten und der zweiten Lichtquelle auch der Analysator wahlweise von der zirkularen zu der elliptischen Wirkungsweise umschaltet.

Die wenigstens eine Inspektionsstation kann ein Spiegelkabinett umfassen, um mehrere Behälterseiten in das Kamerasystem hinein abzubilden. Durch das Spiegelkabinett kann der Strahlengang des Kamerasystems durch Spiegel in mehrere Sektoren aufgeteilt werden, wobei das Kamerasystem in jedem Sektor eine andere Blickrichtung auf den zu inspizierenden Behälter erhält. Folglich können im Kamerabild gleichzeitig mehrere Blickrichtungen auf den Behälter erfasst werden.

Die Durchlichtinspektionsvorrichtung kann vier der Inspektionsstationen umfassen, die paarweise gegenüberliegend an dem Transporteur angeordnet sind. Zudem kann die Durchlichtinspektionsvorrichtung eine Dreheinheit umfassen, um die Behälter zwischen den paarweise gegenüberliegend angeordneten Inspektionsstationen um 90° zu drehen. Dadurch kann der Behälter zunächst von zwei gegenüberliegenden Seiten her inspiziert, dann mit einer Dreheinheit um 90° gedreht und erneut von zwei anderen gegenüberliegenden Seiten her inspiziert werden. Folglich kann der Behälter besonders gut und zuverlässig rundum inspiziert werden. "Paarweise gegenüberliegend" kann hier bedeuten, dass jeweils zwei der vier Inspektionsstationen gegenüberliegend am Transporteur angeordnet sind. Denkbar ist auch, dass "paarweise gegenüberliegend" bedeutet, dass jeweils zwei der vier Inspektionsstationen gegenüberliegend mit entgegengesetzten Blickrichtungen und in Transportrichtung nacheinander am Transporteur angeordnet sind, so dass zunächst eine erste Behälterseite und danach eine dazu gegenüberliegende zweite Behälterseite inspizierbar ist.

Darüber hinaus stellt die Erfindung zur Lösung der Aufgabenstellung mit dem Anspruch 10 ein Durchlichtinspektionsverfahren zur Seitenwandinspektion von Behältern bereit. Vorteilhafte Ausführungsformen sind in den Unteransprüchen genannt.

Dadurch, dass die Beleuchtungseinrichtung die zweite Lichtquelle umfasst, die das infrarote Lichtspektrum abgibt, das mit dem nachgeschalteten Polarisator elliptisch polarisiert wird, kann durch das Umschalten zwischen der ersten Lichtquelle und der zweiten Lichtquelle zwischen zirkular oder elliptisch polarisiertem Licht gewählt werden. Folglich ist es also möglich, ohne einen Umbau der wenigstens eine Inspektionsstation sowohl mit zirkular polarisierten Licht bei spannungsfreien Behältertypen als auch mit elliptisch polarisierten Licht bei spannungsbehafteten Behältertypen zu arbeiten.

Folglich können mit dem erfindungsgemäßen Durchlichtinspektionsverfahren transparente Fremdkörper in spannungsfreien und spannungsbehafteten Behältertypen gleichermaßen zuverlässig erkannt werden.

Das Durchlichtinspektionsverfahren kann mit der zuvor beschriebenen Durchlichtinspektionsvorrichtung, vorzugsweise nach einem der Ansprüche 1-9, durchgeführt werden. Das Durchlicht Inspektionsverfahren kann in einer Getränkeverarbeitungsanlage oder in einer Anlage zur Herstellung von Behältern durchgeführt werden.

Das Durchlichtinspektionsverfahren kann die zuvor in Bezug auf die Durchlichtinspektionsvorrichtung beschriebenen Merkmale einzelnen oder in beliebigen Kombinationen sinngemäß umfassen.

Die durchleuchteten Behälter können Seitenwände mit Eigenspannungen aufweisen, wobei die erste Lichtquelle deaktiviert und die zweite Lichtquelle aktiviert wird, so dass die Behälter mit elliptisch polarisiertem Licht durchleuchtet werden, um die Erfassung der Eigenspannungen zu unterdrücken. Anders ausgedrückt kann es sich bei den durchleuchteten Behältern um einen spannungsfreien und spannungsbehafteten Behältertyp handeln.

Der Polarisator kann derart ausgerichtet sein, dass eine Hauptpolarisationsrichtung des elliptisch polarisierten Lichts parallel zu einer Behälterlängsachse verläuft. Da die Eigenspannungen vorzugsweise in Richtung der Behälterlängsachse verlaufen, wird das elliptisch polarisierte Licht in den Seitenwänden nur wenig in seiner Polarisation verändert. Dadurch wird ein besonders hoher Kontrast erzielt.

Die durchleuchteten Behälter können spannungsarme oder spannungsfreie Seitenwände aufweisen, wobei die zweite Lichtquelle deaktiviert und die erste Lichtquelle aktiviert wird, sodass die Behälter mit zirkular polarisiertem Licht durchleuchtet werden, um die Erfassung von transparenten Fremdkörper zu verstärken. Durch das zirkularpolarisierte Licht werden die transparenten Fremdkörper in Behältern mit spannungsarmen oder spannungsfreien Seitenwänden unabhängig von deren Orientierung besonders gut erkannt.

Der Analysator kann das zirkular polarisierte, sichtbare Lichtspektrum und das elliptisch polarisierte, infrarote Lichtspektrum in linear polarisiertes Licht rücktransformieren. Ein Verzögerungselement des Analysators kann das zirkulare polarisierte, sichtbare Lichtspektrum und das elliptisch polarisierte, infrarote Lichtspektrum wieder in linear polarisiertes Licht umwandeln, das anschließend einen um 45° verdrehten linearen Polfilter des Analysators passiert.

Weitere Merkmale und Vorteile der Erfindung werden nachfolgend anhand der in den Figuren dargestellten Ausführungsbeispiele näher erläutert. Dabei zeigt:
- Figur 1: ein erfindungsgemäßes Ausführungsbeispiel einer Durchlichtinspektionsvorrichtung in einer seitlichen Ansicht;
- Figur 2A: einen spannungsreichen Behältertypen beim Durchleuchten mit elliptisch polarisiertem Licht in der Durchlichtinspektionsvorrichtung aus der Figur 1 in einer seitlichen Ansicht;
- Figur 2B: einen spannungsfreien Behältertypen beim Durchleuchten mit zirkular polarisierten Lichts in der Durchlichtinspektionsvorrichtung aus der Figur 1 in einer seitlichen Ansicht; und
- Figur 3: den Aufbau des Polarisators bzw. des Analysators der Durchlichtinspektionsvorrichtung aus der Figur 1 in einer seitlichen Ansicht.

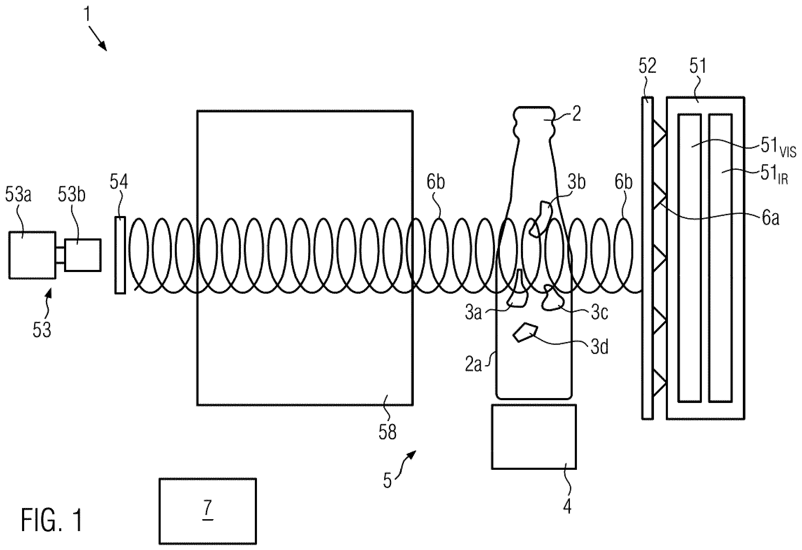

In der Figur 1 ist ein erfindungsgemäßes Ausführungsbeispiel einer Durchlichtinspektionsvorrichtung 1 in einer seitlichen Ansicht dargestellt. Zu sehen ist der Transporteur 4 und die daran angegliederte Inspektionsstation 5 zum Durchleuchten der Seitenwand 2a des Behälters 2 mit dem polarisierten Licht 6b.

Der Transporteur 4 ist hier beispielsweise als Lineartransporteur ausgebildet, um die Behälter 2 zwischen der Beleuchtungseinrichtung 51 mit dem nachgeschalteten Polarisator 52 und dem Kamerasystem 53 mit dem vorgeschalteten Analysator 54 hindurch zu transportieren. Die Behälter 2 können dabei vorzugsweise kontinuierlich transportiert und fortlaufend von dem Kamerasystem 53 erfasst werden.

Die Beleuchtungseinrichtung 51 umfasst eine erste Lichtquelle 51_{VIS} zur Abgabe eines sichtbaren Lichtspektrums und eine zweite Lichtquelle 51_{IR} zur Abgabe eines infraroten Lichtspektrums. Beispielsweise ist die erste Lichtquelle 51_{VIS} mit einer Vielzahl von LEDs ausgebildet, die weißes Licht abstrahlen, vorzugsweise in einem Wellenlängenbereich von 380 nm bis 780 nm. Dagegen ist beispielsweise die zweite Lichtquelle 51_{IR} mit einer Vielzahl von LEDs ausgebildet, die infrarotes Licht abstrahlen, vorzugsweise in einem Wellenlängenbereich von 780 nm bis 3 µm. Denkbar ist auch, dass die erste Lichtquelle 51_{VIS} nur monochromatisches Licht, beispielsweise grünes Licht mit einer Wellenlänge von 560 nm und/oder die zweite Lichtquelle 51_{IR} nur monochromatisches Licht, beispielsweise nahes Infrarot mit einer Wellenlänge von 850 nm abgibt.

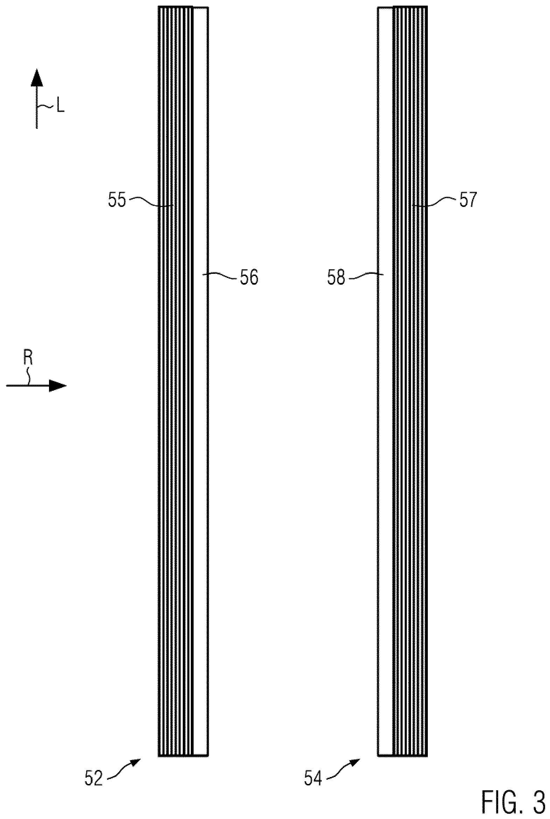

Weiterhin ist der Beleuchtungseinrichtung 51 der Polarisator 52 nachgeschaltet, der zur zirkularen Polarisation des sichtbaren Lichtspektrums der ersten Lichtquelle 51_{VIS} und zur elliptischen Polarisation des infraroten Lichtspektrums der zweiten Lichtquelle 51_{IR} ausgebildet ist. Der genaue Aufbau eines derartigen Polarisators 52 wird weiter unten anhand der Figur 3 näher erläutert.

Durch den Polarisator 52 wird das unpolarisierte Licht 6a der Beleuchtungseinrichtung 51 je nachdem ob die erste Lichtquelle 51_{VIS} oder die zweite Lichtquelle 51_{IR} aktiviert ist, wahlweise zirkular oder elliptisch polarisiert. Folglich kann also durch Umschalten zwischen der ersten Lichtquelle 51_{VIS} und der zweiten Lichtquelle 51_{IR} der Behälter 2 wahlweise mit zirkular oder elliptisch polarisierten Licht 6b durchleuchtet werden, um so die transparenten Fremdkörper 3a-3d zu erfassen.

Ferner ist zu sehen, dass dem Kamerasystem 53 der Analysator 54 vorgeschaltet ist. Der Analysator 54 ist hier umgekehrt aufgebaut wie der Polarisator 52, so dass er die zirkulare Polarisation des sichtbaren Lichtspektrums und die elliptischen Polarisation des infraroten Lichtspektrums wieder in linear polarisiertes Licht rückverwandelt. Dieses Licht gelangt zum Kamerasystem 53.

Das Kamerasystem 53 umfasst eine Kamera 53a und ein Objektiv 53b. Mit dem Objektiv 53b wird der Behälter 2 über das Spiegelkabinett 58 auf einen Bildsensor der Kamera 53a abgebildet, der hier beispielsweise ein flächenhafter CMOS-Sensor.

Zudem ist zu sehen, dass dem Kamerasystem 53 das Spiegelkabinett 58 vorgeschaltet ist. Dadurch ist es möglich, mehrere Behälterseiten nebeneinander als Bildsektoren in das Kamerasystem 53 hinein abzubilden. Mit dem Spiegelkabinett 58 und dem Objektiv 53b können beispielsweise mindestens zwei Ansichten des Behälters 2 aus verschiedenen Blickwinkeln nebeneinander auf den Bildsensor der Kamera 53a abgebildet werden und so in einem Kamerabild erfasst werden.

Des weiteren ist die Steuerungseinrichtung 7 zu sehen, mit der die Beleuchtungseinrichtung 51 so ansteuerbar ist, dass wahlweise die erste Lichtquelle 51_{VIS} zur Abgabe des sichtbaren Lichtspektrums oder die zweite Lichtquelle 51_{IR} zur Abgabe des infraroten Lichtspektrums aktiviert wird. Entsprechend wird die jeweils andere Lichtquelle deaktiviert. Darüber hinaus ist die Steuerungseinrichtung 7 dazu ausgebildet, das Kamerasystem 53 anzusteuern und die Kamerabilder mittels einer Bildverarbeitungseinheit auszuwerten. Die Steuerungseinrichtung 7 ist dazu mit entsprechenden Steuer- und Datenleitung mit der Beleuchtungseinrichtung 51 und dem Kamerasystem 53 verbunden. Denkbar ist auch, dass die Steuerungseinrichtung 7 dazu ausgebildet ist, den Transporteur 4 zu steuern und/oder die Position der Behälter 2 gegenüber der Inspektionsstationen 5 als Transportpostionen zu erfassen. Dadurch kann das Ansteuern der Beleuchtungseinrichtung 51 und des Kamerasystems 53 auf den Transport der Behälter 2 getriggert werden.

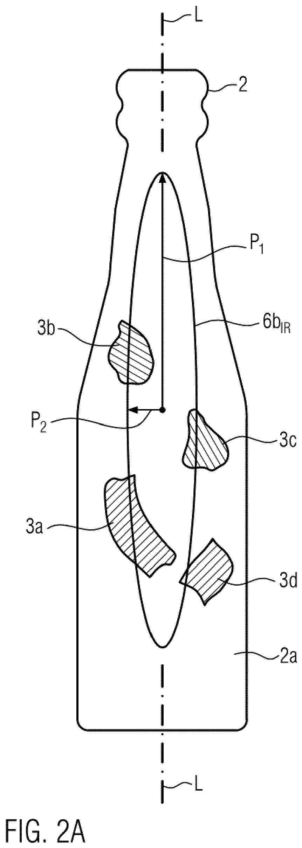

Die Inspektion der Behälter 2 wird nachfolgend anhand der Figuren 2A - 2B näher erläutert:
In der Figur 2A ist einen spannungsreichen Behältertyp beim Durchleuchten mit elliptisch polarisiertem Licht 6b_{IR} in der Durchlichtinspektionsvorrichtung 1 aus der Figur 1 in einer seitlichen Ansicht zu sehen.

Der in der Figur 2A dargestellte Behälter 2 weist Eigenspannungen in den Seitenwänden auf. Zudem ist zu sehen, dass sich in dem Behälter 2 mehrere transparente Fremdkörper 3a - 3d befinden, beispielsweise Folienreste oder dergleichen.

Zur Inspektion des Behälters 2 wird bei der in der Figur 1 dargestellten Beleuchtungseinrichtung 51 die zweite Lichtquelle 51_{IR} aktiviert, so dass unpolarisiertes Licht 6a im infraroten Lichtspektrum abgegeben wird. Durch den Polarisator 52 wird das unpolarisierte Licht 6a elliptisch polarisiert, so dass der Behälter 2 in der Figur 2A mit dem elliptisch polarisierten Licht 6b_{IR} durchleuchtet wird.

Zudem ist in der Figur 2A zu sehen, dass die Hauptpolarisationsrichtung P₁ des Polarisators 52 und damit des elliptisch polarisierten Lichts 6b_{IR} parallel bzw. die Nebenpolarisationsrichtung P₂ quer zur Behälterlängsachse L verläuft. Die thermische Härtung des Behälters 2 erzeugt eine spannungs-optische Vorzugsrichtung, die in der Richtung der Behälterlängsachse L verläuft.

Durch die Orientierung des Polarisators 52 und damit des elliptisch polarisierten Lichts 6b_{IR} wirken sich allerdings die Eigenspannungen nicht als dunkle Flecken im Kamerabild aus.

Demgegenüber verändern die transparenten Fremdkörper 3a - 3d beim Durchleuchten die Orientierung des elliptisch polarisierten Lichts, so dass durch den nachgeschalteten Analysator 54 entsprechend weniger Licht durchdringt. Folglich werden die transparenten Fremdkörper 3a - 3d im Kamerabild dunkler abgebildet.

Folglich ist es also bei Aktivierung der zweiten Lichtquelle 51_{IR} im infraroten Lichtspektrum und dem dadurch erzeugten elliptisch polarisierten Licht 6b_{IR} möglich, einen Behältertyp mit Eigenspannungen in der Seitenwand 2a zu durchleuchten und dennoch die transparenten Fremdkörper 3a - 3d zuverlässig zu erkennen.

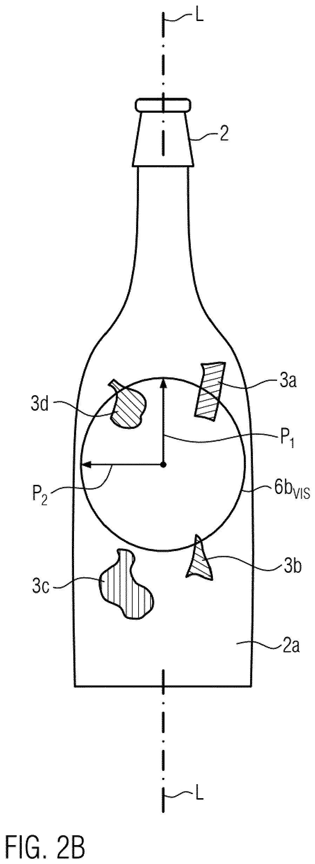

Demgegenüber ist in der Figur 2B ein dickwandiger Behältertyp beim Durchleuchten mit zirkular polarisiertem Licht 6b_{VIS} in der Durchlichtinspektionsvorrichtung 1 aus der Figur 1 in einer seitlichen Ansicht zu sehen.

Der in der Figur 2B dargestellte Behälter 2 weist nur geringe oder gar kein Eigenspannungen auf. Zudem ist zu sehen, dass sich in dem Behälter 2 mehrere transparente Fremdkörper 3a - 3d befinden, beispielsweise Folienreste oder dergleichen.

Zur Inspektion des Behälters 2 wird bei der in der Figur 1 dargestellten Beleuchtungseinrichtung 51 die erste Lichtquelle 51_{VIS} aktiviert, so dass polarisiertes Licht 6a im sichtbaren Lichtspektrum abgegeben wird. Durch den Polarisator 52 wird das sichtbare Licht 6a zirkular polarisiert, so dass der Behälter 2 in der Figur 2B mit dem zirkular polarisierten Licht 6b_{VIS} durchleuchtet wird.

Da die Seitenwände des Behälters 2 keine Eigenspannungen aufweisen, wird die Polarisationsrichtung des zirkular polarisierten Lichts 6b_{VIS} nicht beeinflusst, wohingegen die transparenten Fremdkörper 3a - 3d die Polarisation verändern. Dadurch dringt entsprechend weniger Licht durch den nachgeschalteten Analysator 54 hindurch, sodass die transparenten Fremdkörper 3a - 3d im Kamerabild entsprechend dunkler abgebildet werden.

Folglich ist es also bei Aktivierung der ersten Lichtquelle 51_{VIS} im sichtbaren Lichtspektrum und dem dadurch erzeugten zirkular polarisierten Licht 6b_{VIS} möglich, einen Behältertyp mit nur geringen oder gar kein Eigenspannungen in der Seitenwand 2a zu durchleuchten und die transparenten Fremdkörper 3a - 3d besonders zuverlässig zu erkennen.

In der Figur 3 ist ein Schnitt durch den in der Figur 1 dargestellten Polarisator 52 bzw. den Analysator 54 in einer seitlichen Ansicht dargestellt. Sie sind spiegelbildlich aufgebaut, wobei der Polarisator 52 einen ersten linearen Polarisationsfilter 55 und ein nachgeschaltetes erstes Verzögerungselement 56 bzw. der Analysator 54 ein zweites Verzögerungselement 58 und einen nachgeschalteten zweiten linearen Polarisationsfilter 57 umfasst. Das Licht durchläuft den Polarisator 52 bzw. den Analysator 54 aus der Richtung R.

Zu sehen ist auch, dass der erste bzw. zweite lineare Polarisationsfilter 55, 57 derart angeordnet sind, dass deren Polarisationsrichtung beim Durchleuchten der Behälter parallel zu der Behälterlängsachse L verläuft. Bei dem ersten bzw. zweiten Verzögerungselement 56, 58 handelt es sich um eine λ/4-Verzögerungsschicht, die eine Zirkularpolarisation des sichtbaren Lichtspektrums und eine elliptische Polarisation des infraroten Lichtspektrums bewirkt.

Denkbar ist, dass der Polarisator 52 und/oder der Analysator 54 als Polarisationsfolien ausgebildet sind. Dadurch können Sie auch großflächig besonders kostensparend hergestellt werden.

Durch die Anordnung des ersten bzw. zweiten linearen Polarisationsfilters 55, 57 und des nachgeordneten ersten bzw. zweiten Verzögerungselements 56, 58 verläuft die Hauptpolarisationsrichtung P1 des Polarisators 52 bzw. des Analysators 54 parallel zur Behälterlängsachse L, so dass auch transparente Fremdkörper 3a - 3d in spannungsbehafteten Behältertypen besonders zuverlässig erkannt werden können.

Die Erkennung der transparenten Fremdkörper 3a - 3d in den Kamerabildern erfolgt mit an sich bekannten Bildverarbeitungsalgorithmen, die dunkle Bildbereiche und/oder Kontrastkanten identifizieren. Befindet sich wenigstens ein transparenter Fremdkörper 3a - 3d in einem Behälter 2, so kann dieser erneut gereinigt, recycelt oder aussortiert werden. Dies kann beispielsweise automatisch mit einer der Durchlichtinspektionsvorrichtung in der Figur 1 nachgeordneten Weiche erfolgen.

Insgesamt wird die Durchlichtinspektionsvorrichtung der Figuren 1-3 wie folgt eingesetzt:
Die Behälter 2 werden mit dem Transporteur 4 zu der daran angegliederten Inspektionsstation 5 transportiert und mit polarisiertem Licht 6b durchleuchtet. Um Behälter 2 mit besonders wenig oder gar keinen Eigenspannungen zu inspizieren, wird die erste Lichtquelle 51_{VIS} aktiviert, sodass sie ein sichtbares Lichtspektrum abgibt. Dies wird anschließend mit dem nachgeschalteten Polarisator 52 zirkular polarisiert und so der Behälter 2 durchleuchtet. Das Kamerasystem 52 mit dem vorgeschalteten Analysator 54 erfasst den durchleuchteten Behälter 2, wobei die transparenten Fremdkörper 3a - 3d dunkler als die Seitenwand 2a im Kamerabild abgebildet werden. Demgegenüber wird, um Behälter 2 mit Eigenspannungen zu inspizieren, die zweite Lichtquelle 51_{IR} aktiviert, so dass sie ein infrarotes Lichtspektrum abgibt. Das Licht wird anschließend mit dem nachgeschalteten Polarisator 52 elliptisch polarisiert und so der Behälter 2 durchleuchtet.

Demzufolge ist es also mit der Durchlichtinspektionsvorrichtung 1 der Figuren 1-3 besonders einfach möglich, zwischen zirkular und elliptisch polarisiertem Licht 6b_{VIS}, 6b_{IR} für die Durchleuchtung der Behälter 2 umzuschalten. Wie zuvor dargelegt, eignet sich das zirkular polarisierten Licht 6b_{VIS} besonders für Behältertypen mit nur geringen oder gar keinen Eigenspannungen bzw. das elliptisch polarisierte Licht 6b_{IR} besonders für Behältertypen mit Eigenspannungen in der Seitenwand. Folglich kann bei der Durchlichtinspektionsvorrichtung 1 die erste bzw. die zweite Lichtquelle 51_{VIS}, 51_{IR} so angesteuert werden, dass sowohl spannungsbehaftete als auch spannungsfreie Behältertypen besonders zuverlässig inspiziert werden können.

Es versteht sich, dass in den zuvor beschriebenen Ausführungsbeispielen genannte Merkmale nicht auf diese Merkmalskombination beschränkt sind sondern auch einzelnen oder in beliebigen anderen Merkmalskombinationen möglich sind.

## Patentansprüche

1. Durchlichtinspektionsvorrichtung (1) zur Seitenwandinspektion von Behältern (2), mit
- einem Transporteur (4) zum Transport der Behälter (2), und
- mit wenigstens einer an dem Transporteur (4) angegliederten Inspektionsstation (5) zum Durchleuchten der Behälter (2) mit polarisiertem Licht (6b),
wobei die wenigstens eine Inspektionsstation (5) eine Beleuchtungseinrichtung (51) mit einer ersten Lichtquelle (51_{VIS}) und mit einem nachgeschalteten Polarisator (52) und ein Kamerasystem (53) mit einem vorgeschalteten Analysator (54) umfasst,
wobei die erste Lichtquelle (51_{VIS}) zur Abgabe eines sichtbaren Lichtspektrums ausgebildet ist, und
wobei der Polarisator (52) zur zirkularen Polarisation des sichtbaren Lichtspektrums ausgebildet ist,
**dadurch gekennzeichnet, dass**
die Beleuchtungseinrichtung (51) eine zweite Lichtquelle (51_{IR}) zur Abgabe eines infraroten Lichtspektrums umfasst, wobei der Polarisator (52) der zweiten Lichtquelle (51_{IR}) ebenfalls nachgeschaltet ist, und
dass der Polarisator (52) zur elliptischen Polarisation des infraroten Lichtspektrums ausgebildet ist, so dass die Behälter (2) durch ein Umschalten zwischen der ersten Lichtquelle (51_{VIS}) und der zweiten Lichtquelle (51_{IR}) wahlweise mit zirkular oder elliptisch polarisiertem Licht (6b_{VIS}, 6b_{IR}) durchleuchtet werden.

2. Durchlichtinspektionsvorrichtung (1) nach Anspruch 1, wobei der Polarisator (52) derart angeordnet ist, dass beim Durchleuchten der Behälter (2) mit der zweiten Lichtquelle (51_{IR}) eine Hauptpolarisationsrichtung (P₁) des Polarisators (52) parallel zu einer Behälterlängsachse (L) verläuft.

3. Durchlichtinspektionsvorrichtung (1) nach Anspruch 1 oder 2, wobei der Polarisator (52) einen ersten linearen Polarisationsfilter (55) und ein nachgeschaltetes erstes Verzögerungselement (56) umfasst, und wobei der erste lineare Polarisationsfilter (55) derart angeordnet ist, dass dessen Polarisationsrichtung (P₁) beim Durchleuchten der Behälter (2) parallel zur Behälterlängsachse (L) verläuft.

4. Durchlichtinspektionsvorrichtung (1) nach einem der vorangegangenen Ansprüche, wobei der Analysator (54) zur zirkularen Polarisation des sichtbaren Lichtspektrums und zur elliptischen Polarisation des infraroten Lichtspektrums ausgebildet ist.

5. Durchlichtinspektionsvorrichtung (1) nach Anspruch 4, wobei der Analysator (54) derart angeordnet ist, dass beim Durchleuchten der Behälter (2) mit der zweiten Lichtquelle eine Hauptpolarisationsrichtung des Analysators (54) parallel zu einer Behälterlängsachse (L) verläuft.

6. Durchlichtinspektionsvorrichtung (1) nach Anspruch 4 oder 5, wobei der Analysator (54) ein zweites Verzögerungselement (58) und einen nachgeschalteten zweiten linearen Polarisationsfilter (57) umfasst, und wobei der zweite lineare Polarisationsfilter (57) derart angeordnet ist, dass dessen Polarisationsrichtung beim Durchleuchten parallel zu der Behälterlängsachse (L) verläuft.

7. Durchlichtinspektionsvorrichtung (1) nach einem der vorangegangenen Ansprüche, wobei die wenigstens eine Inspektionsstation (5) ein Spiegelkabinett (55) umfasst, um mehrere Behälterseiten in das Kamerasystem (53) hinein abzubilden.

8. Durchlichtinspektionsvorrichtung (1) nach einem der vorangegangenen Ansprüche, wobei das sichtbare Lichtspektrum in einem Wellenlängenbereich von 380 nm bis 780 nm und/oder das infrarote Lichtspektrum in einem Wellenlängenbereich von 780 nm bis 3 µm liegen.

9. Durchlichtinspektionsvorrichtung (1) nach einem der vorangegangenen Ansprüche, wobei die Inspektionsvorrichtung vier der Inspektionsstationen (5) umfasst, die paarweise gegenüberliegend an dem Transporteur (4) angeordnet sind.

10. Durchlichtinspektionsverfahren zur Seitenwandinspektion von Behältern (2), wobei die Behälter (2) mit einem Transporteur (4) zu wenigstens einer daran angegliederten Inspektionsstation (5) transportiert und mit der wenigstens einen Inspektionsstation (5) mit polarisiertem Licht (6b) durchleuchtet werden, wobei die wenigstens eine Inspektionsstation (5) eine Beleuchtungseinrichtung (51) mit einer ersten Lichtquelle (51_{VIS}) umfasst, die ein sichtbares Lichtspektrum abgibt, das mit einem nachgeschalteten Polarisator (52) zirkular polarisiert wird, und wobei die wenigstens eine Inspektionsstation (5) ein Kamerasystem (52) mit einem vorgeschalteten Analysator (54) umfasst, mit der die durchleuchteten Behälter (2) erfasst werden,
**dadurch gekennzeichnet, dass**
die Beleuchtungseinrichtung (51) eine zweite Lichtquelle (51_{IR}) umfasst, die ein infrarotes Lichtspektrum abgibt und das mit dem nachgeschalteten Polarisator (52) elliptisch polarisiert wird, und
dass zwischen der ersten und der zweiten Lichtquelle (51_{VIS}, 51_{IR}) umgeschaltet wird, um die Behälter (2) wahlweise mit zirkular oder elliptisch polarisiertem Licht (6b_{VIS}, 6b_{IR}) zu durchleuchten.

11. Durchlichtinspektionsverfahren nach Anspruch 10, wobei die durchleuchteten Behälter (2) Seitenwände (2a) mit Eigenspannungen aufweisen, und wobei die erste Lichtquelle (51_{VIS}) deaktiviert und die zweite Lichtquelle (51_{IR}) aktiviert wird, so dass die Behälter (2) mit elliptisch polarisiertem Licht durchleuchtet werden, um die Erfassung der Eigenspannungen zu unterdrücken.

12. Durchlichtinspektionsverfahren nach Anspruch 11, wobei der Polarisator (52) derart ausgerichtet wird, dass eine Hauptpolarisationsrichtung (P₁) des elliptisch polarisierten Lichts parallel zu einer Behälterlängsachse (L) verläuft.

13. Durchlichtinspektionsverfahren nach Anspruch 10, wobei die durchleuchteten Behälter (2) spannungsarme oder spannungsfreie Seitenwände (2b) aufweisen, und wobei die zweite Lichtquelle (51_{IR}) deaktiviert und die erste Lichtquelle (51_{VIS}) aktiviert wird, so dass die Behälter (2) mit zirkular polarisiertem Licht durchleuchtet werden, um die Erfassung von transparenten Fremdkörpern (3a - 3d) zu verstärken.

14. Durchlichtinspektionsverfahren nach einem der Ansprüche 10 - 13, wobei der Analysator (54) das zirkular polarisierte, sichtbare Lichtspektrum sowie das elliptisch polarisierte, infrarote Lichtspektrum in linear polarisiertes Licht rücktransformiert.

## Claims

1. Transmitted light inspection apparatus (1) for side wall inspection of containers (2), with
- a conveyor (4) for conveying the containers (2), and
- with at least one inspection station (5) associated with the conveyor (4) for raying the containers (2) with polarized light (6b),
wherein the at least one inspection station (5) comprises an illumination device (51) with a first light source (51_{VIS}) and with a downstream polarizer (52) and a camera system (53) with an upstream analyzer (54),
wherein the first light source (51_{VIS}) is configured for emitting a visible light spectrum, and wherein the polarizer (52) is configured for circularly polarizing the visible light spectrum, **characterized in that**, the illumination device (51) comprises a second light source (51_{IR}) for emitting an infrared light spectrum, wherein the polarizer (52) is also downstream of the second light source (51_{IR}), and
that the polarizer (52) is configured for elliptically polarizing the infrared light spectrum, such that the containers (2) can be selectively rayed with circularly or elliptically polarized light (6b_{VIS}, 6b_{IR}) by switching between the first light source (51_{VIS}) and the second light source (51_{IR}).

2. Transmitted light inspection apparatus (1) according to claim 1, wherein the polarizer (52) is arranged such that when raying the containers (2) with the second light source (51_{IR}) a main polarization direction (P₁) of the polarizer (52) runs parallel to a container longitudinal axis (L).

3. Transmitted light inspection apparatus (1) according to claim 1 or 2, wherein the polarizer (52) comprises a first linear polarization filter (55) and a downstream first delay element (56), and wherein the first linear polarization filter (55) is arranged such that its polarization direction (P₁) runs parallel to the container longitudinal axis (L) when raying the containers (2).

4. Transmitted light inspection apparatus (1) according to one of the preceding claims, wherein the analyzer (54) is configured for circularly polarizing the visible light spectrum and for elliptically polarizing the infrared light spectrum.

5. Transmitted light inspection apparatus (1) according to claim 4, wherein the analyzer (54) is arranged such that when raying the containers (2) with the second light source a main polarization direction of the analyzer (54) runs parallel to a container longitudinal axis (L).

6. Transmitted light inspection apparatus (1) according to claim 4 or 5, wherein the analyzer (54) comprises a second delay element (58) and a downstream second linear polarization filter (57), and that the second linear polarization filter (57) is arranged such that its polarization direction during raying runs parallel to the container longitudinal axis (L).

7. Transmitted light inspection apparatus (1) according to one of the preceding claims, wherein the at least one inspection station (5) comprises a mirror cabinet (55) for imaging several container sides into the camera system (53).

8. Transmitted light inspection apparatus (1) according to one of the preceding claims, wherein the visible light spectrum is in a wavelength range from 380 nm to 780 nm and/or the infrared light spectrum is in a wavelength range from 780 nm to 3 µm.

9. Transmitted light inspection apparatus (1) according to one of the preceding claims, wherein the inspection apparatus comprises four of the inspection stations (5), which are arranged pairwise opposite at the conveyor (4).

10. Transmitted light inspection method for side wall inspection of containers (2), wherein the containers (2) are conveyed with a conveyor (4) to at least one therewith associated inspection station (5) and are rayed with the at least one inspection station (5) with polarized light (6b), wherein the at least one inspection station (5) comprises an illumination device (51) with a first light source (51_{VIS}), which emits a visible light spectrum, which is circularly polarized with a downstream polarizer (52), and wherein the at least one inspection station (5) comprises a camera system (52) with an upstream analyzer (54), with which the rayed containers (2) are captured,
**characterized in that**,
the illumination device (51) comprises a second light source (51_{IR}), which emits an infrared light spectrum and that is elliptically polarized with the downstream polarizer (52), and
that it is switched between the first and the second light source (51_{VIS}, 51_{IR}) for selectively raying the containers (2) with circularly or elliptically polarized light (6b_{VIS}, 6b_{IR}).

11. Transmitted light inspection method according to claim 10, wherein the rayed containers (2) comprise side walls (2a) with internal stresses, and wherein the first light source (51_{VIS}) is deactivated and the second light source (51_{IR}) is activated, such that the containers (2) are rayed with elliptically polarized light, to suppress the capturing of the internal stresses.

12. Transmitted light inspection method according to claim 11, wherein the polarizer (52) is aligned such that a main polarization direction (P₁) of the elliptically polarized light runs parallel to a container longitudinal axis (L).

13. Transmitted light inspection method according to claim 10, wherein the rayed containers (2) comprise low-tension or tension free side walls (2b), and wherein the second light source (51_{IR}) is deactivated and the first light source (51_{VIS}) is activated, such that the containers (2) are rayed with circularly polarized light, to amplify the capturing of transparent foreign substances (3a - 3d).

14. Transmitted light inspection method according to one of claims 10 - 13, wherein the analyzer (54) back transforms the circularly polarized, visible light spectrum as well as the elliptically polarized, infrared light spectrum in linear polarized light.

## Revendications

1. Dispositif d'inspection en lumière transmise (1) permettant d'inspecter la paroi latérale de récipients (2), comprenant
- un dispositif de transport (4) permettant de transporter les récipients (2), et
- au moins une station d'inspection (5) raccordée au dispositif de transport (4) et permettant d'éclairer en lumière transmise le récipient (2) avec une lumière polarisée (6b),
dans lequel la au moins une station d'inspection (5) comprend un dispositif d'éclairage (51) muni d'une première source de lumière (51ᵥᵢₛ) et d'un polariseur (52) monté en aval et un système de caméra (53) muni d'un analyseur (54) monté en amont,
dans lequel la première source de lumière (51ᵥᵢₛ) est conçue pour émettre un spectre de lumière visible, et
dans lequel le polariseur (52) est conçu pour une polarisation circulaire du spectre de lumière visible,
**caractérisé en ce que**
le dispositif d'éclairage (51) comprend une deuxième source de lumière (51_{IR}) permettant d'émettre un spectre de lumière infrarouge, dans lequel le polariseur (52) est également monté en aval de la deuxième source de lumière (51_{IR}), et
**en ce que** le polariseur (52) est conçu pour une polarisation elliptique du spectre de lumière infrarouge, de sorte que les récipients (2) sont éclairés en lumière transmise avec une lumière polarisée de manière circulaire ou elliptique (6b_{VIS}, 6b_{IR}) selon la manière souhaitée grâce à une commutation entre la première source de lumière (51_{VIS}) et la deuxième source de lumière (51_{IR}).

2. Dispositif d'inspection en lumière transmise (1) selon la revendication 1, dans lequel le polariseur (52) est agencé de telle manière que, lorsque le récipient (2) est éclairé en lumière transmise avec la deuxième source de lumière (51_{IR}), une direction de polarisation principale (P₁) du polariseur (52) s'étend parallèlement à un axe longitudinal de récipient (L).

3. Dispositif d'inspection en lumière transmise (1) selon la revendication 1 ou 2, dans lequel le polariseur (52) comprend un premier filtre de polarisation linéaire (55) et un premier élément de retard (56) monté en aval, et dans lequel le premier filtre de polarisation linéaire (55) est agencé de telle manière que sa direction de polarisation (P₁) s'étend parallèlement à l'axe longitudinal de récipient (L) lors de l'éclairage en lumière transmise du récipient (2).

4. Dispositif d'inspection en lumière transmise (1) selon l'une quelconque des revendications précédentes, dans lequel l'analyseur (54) est conçu pour une polarisation circulaire du spectre de lumière visible et pour une polarisation elliptique du spectre de lumière infrarouge.

5. Dispositif d'inspection en lumière transmise (1) selon la revendication 4, dans lequel l'analyseur (54) est agencé de telle manière que, lorsque le récipient (2) est éclairé en lumière transmise avec la deuxième source de lumière, une direction de polarisation principale de l'analyseur (54) s'étend parallèlement à un axe longitudinal de récipient (L).

6. Dispositif d'inspection en lumière transmise (1) selon la revendication 4 ou 5, dans lequel l'analyseur (54) comprend un deuxième élément de retard (58) et un deuxième filtre de polarisation linéaire (57) monté en aval, et dans lequel le deuxième filtre de polarisation linéaire (57) est agencé de telle manière que sa direction de polarisation s'étend parallèlement à l'axe longitudinal de récipient (L) lors de l'éclairage en lumière transmise.

7. Dispositif d'inspection en lumière transmise (1) selon l'une quelconque des revendications précédentes, dans lequel la au moins une station d'inspection (5) comprend une cabine à miroirs (55) afin de restituer plusieurs faces de récipient dans le système de caméra (53).

8. Dispositif d'inspection en lumière transmise (1) selon l'une quelconque des revendications précédentes, dans lequel le spectre de lumière visible se situe dans une plage de longueurs d'onde comprise entre 380 nm et 780 nm et/ou le spectre de lumière infrarouge se situe dans une plage de longueurs d'onde comprise entre 780 nm et 3 µm.

9. Dispositif d'inspection en lumière transmise (1) selon l'une quelconque des revendications précédentes, dans lequel le dispositif d'inspection comprend quatre stations d'inspection (5) agencées par paires face au dispositif de transport (4).

10. Procédé d'inspection en lumière transmise permettant d'inspecter la paroi latérale de récipients (2), dans lequel les récipients (2) sont transportés par un dispositif de transport (4) vers au moins une station d'inspection (5) raccordée audit dispositif de transport et sont éclairés en lumière transmise avec une lumière polarisée (6b) par la au moins une station d'inspection (5), dans lequel la au moins une station d'inspection (5) comprend un dispositif d'éclairage (51) avec une première source de lumière (51_{VIR}) qui émet un spectre de lumière visible polarisé de manière circulaire par un polariseur (52) monté en aval, et dans lequel la au moins une station d'inspection (5) comprend un système de caméra (52) avec un analyseur (54) monté en amont et grâce auquel les récipients (2) éclairés en lumière transmise sont détectés,
**caractérisé en ce que**
le dispositif d'éclairage (51) comprend une deuxième source de lumière (51_{IR}) qui émet un spectre de lumière infrarouge polarisé de manière elliptique par le polariseur (52) monté en aval, et
**en ce qu'**une commutation est effectuée entre les première et deuxième sources de lumière (51ᵥᵢₛ, 51_{IR}) afin d'éclairer en lumière transmise les récipients (2) avec une lumière polarisée de manière circulaire ou elliptique (6bᵥᵢₛ, 61b_{IR}) selon la manière souhaitée.

11. Procédé d'inspection en lumière transmise selon la revendication 10, dans lequel les récipients (2) éclairés en lumière transmise présentent des parois latérales (2a) avec des tensions résiduelles, et dans lequel la première source de lumière (51ᵥᵢₛ) est désactivée et la deuxième source de lumière (51_{IR}) est activée, de sorte que les récipients (2) sont éclairés en lumière transmise avec une lumière polarisée de manière elliptique afin de supprimer la détection des tensions résiduelles.

12. Procédé d'inspection en lumière transmise selon la revendication 11, dans lequel le polariseur (52) est orienté de telle manière qu'une direction de polarisation principale (P₁) de la lumière polarisée de manière elliptique s'étend de manière parallèle à un axe longitudinal de récipient (L).

13. Procédé d'inspection en lumière transmise selon la revendication 10, dans lequel les récipients (2) éclairés en lumière transmise présentent des parois latérales (2b) à faible tension ou sans tension, et dans lequel la deuxième source de lumière (51_{IR}) est désactivée et la première source de lumière (51 vis) est activée, de sorte que les récipients (2) sont éclairés en lumière transmise avec une lumière polarisée de manière circulaire afin de renforcer la détection de corps étrangers transparents (3a à 3d).

14. Procédé d'inspection en lumière transmise selon l'une quelconque des revendications 10 à 13, dans lequel l'analyseur (54) retransforme le spectre de lumière visible polarisé de manière circulaire et le spectre de lumière infrarouge polarisé de manière elliptique en lumière polarisée de manière linéaire.
